# EUROPÄISCHE PATENTSCHRIFT

(11) **EP 3 681 848 B1**
(45) Veröffentlichungstag und Bekanntmachung des Hinweises auf die Patenterteilung: **27.12.2023**
(21) Anmeldenummer: 18769586.1
(22) Anmeldetag: 14.08.2018
(51) Int. Cl.: C03C 17/00, C03C 17/32, C03C 17/34, C09D 4/00, C09D 4/06

(54) **ZUSAMMENSETZUNGEN ZUR HERSTELLUNG VON GLASBESCHICHTUNGEN MITTELS INKJET-DRUCKVERFAHREN UND DEREN VERWENDUNG**
COMPOSITIONS FOR PRODUCING GLASS COATINGS BY WAY OF INKJET PRINTING TECHNIQUES AND USE THEREOF
COMPOSITIONS PERMETTANT DE RÉALISATION DE REVÊTEMENTS EN VERRE PAR UN PROCÉDÉ D'IMPRESSION À JET D'ENCRE ET LEUR UTILISATION

(30) Priorität: 10.09.2017 DE 102017008457
(43) Veröffentlichungstag der Anmeldung: 22.07.2020
(73) Patentinhaber: Mankiewicz Gebr.&Co. (GmbH&CO. KG), 21107 Hamburg (DE)
(72) Erfinder: DE ROSSI, Umberto, 22844 Norderstedt (DE); BOLENDER, Oliver, 20251 Hamburg (DE); STEFFEN, Timo, 21244 Buchholz (DE)
(86) Internationale Anmeldenummer: PCT/DE2018/100710
(87) Internationale Veröffentlichungsnummer: WO 2019/047993

(56) Entgegenhaltungen:
- US-A- 5 128 391
- US-A1- 2007 172 637
- US-A1- 2012 077 896
- US-A1- 2017 210 908

## Beschreibung

Die vorliegende Erfindung betrifft Beschichtungstoffe und deren Verwendung zur Herstellung von Beschichtungen und Beschichtungssystemen auf Glasoberflächen sowie digitale Verfahren zur Bedruckung von Glassubstraten insbesondere von Flachgläsern und Glasformbehältern.

Als digitale Druckverfahren oder Digitaldruck werden Druckverfahren bezeichnet, bei denen das Druckbild direkt von einem Computer in eine Druckmaschine übertragen wird, ohne dass eine statische Druckform benutzt wird. Bekannte digitale Druckverfahren sind elektrofotografische Druckverfahren und Tintenstrahldruckverfahren, die auch als Inkjet-Druckverfahren bezeichnet werden.

Zur Dekoration von Glasoberflächen werden üblicherweise Inkjet-Druckverfahren eingesetzt. Die Anforderung an die Beständigkeiten der Dekore auf Gebrauchsgegenständen wie Trinkgläsern, Getränkeflaschen und anderen Glasverpackungen können bisher nur durch aufwendige mehrschichtige Beschichtungssysteme erfüllt werden. Dabei werden die Glasoberflächen zunächst mit einer Flammensilikatisierung vorbehandelt. Anschließend wird eine Primerschicht aufgebracht, wobei der oder die Primerbeschichtungsstoffe entweder durch Tauchen, Sprühen, Walzen oder Wischen auf die vorbehandelte Glasoberfläche appliziert werden. Alternativ werden auch herkömmliche Druckverfahren wie z.B. Siebdruck eingesetzt.

Im Folgenden wird unter dem Begriff Primer- oder Grundierungsschicht die erste Schicht eines Beschichtungssystems verstanden, die auf ein Substrat aufgebracht wird. Die Primerschicht kann aus ein oder mehren Beschichtungen bestehen, welche aus ein oder mehreren Beschichtungsstoffen hergestellt werden. Auf der Primerschicht wird die Muster- oder Dekorschicht aufgebracht, welche eine oder mehrere Tintenbeschichtungen hergestellt aus Tinten mittels Inkjet-Druckverfahren aufweist. Zum Schluss wird eine Topcoatschicht aus ein oder mehreren Topcoatbeschichtungen auf die Musterschicht aufgebracht. Die Topcoatbeschichtungen können mittels Inkjet-Druckverfahren oder mittels herkömmlicher Druck- und Lackierverfahren aufgebracht werden. Als Topcoatschicht oder Deckschicht wird im Folgenden die oberste Schicht eines Beschichtungssystems bezeichnet, welche die darunterliegenden Schichten gegen mechanische Beschädigungen und chemische Belastungen schützt.

Nachteil der bisherigen Bedruckung ist der Einsatz unterschiedlicher Applikations-, Härtungs- und Druckverfahren, welcher zu einem hohen Arbeits- und Zeitaufwand führt. Darüber hinaus weisen die üblicherweise eingesetzten Primerbeschichtungsstoffe einen Lösemittelgehalt von über 90 Gew.-% auf, wodurch ein Mindestmaß an Zeit nach der Applikation der Beschichtungsstoffe zum Abdampfen des Lösemittels aus der applizierten Schicht erforderlich ist. Auch fallen größere Mengen an Lösemitteldämpfen an, die aufwendig abgeführt werden müssen. Ein weiterer Nachteil ist, dass übliche Primerbeschichtungsstoffe nicht ohne Weiteres in verlässlicher Weise per Inkjet-Druckverfahren aufgetragen werden können. D.h. eine weitere Applikationstechnologie muss in die Druckanlage integriert sein.

Aus US 2012/0077896 A1 sind strahlungshärtende Inkjet-Tinten bekannt, welche auf Glasoberflächen gut haften. Sie härten zu alkohol- und wasserbeständigen Beschichtungen aus, die keine zusätzlichen Primer- oder Topcoatbeschichtungen erfordern. Die erhaltenen Beschichtungen sind jedoch nicht hinreichend kratz- und wasserbeständig und zeigen nur eine geringe Spülmaschinenfestigkeit.

Aus US 2017/210908 A1 sind Beschichtungsstoffe auf der Basis von UV-härtbaren Acrylat-Monomeren zur Herstellung von Fensterbeschichtungen bekannt. Die erhaltenen Fensterbeschichtungen zeigen hohe Bewitterungsstabilität, verbesserte Transmission sowie verringerte Eintrübung.

Aus US 5128391 A sind Beschichtungsstoffe auf der Basis von monomeren und oligomeren Acrylaten und Methacrylaten zur Herstellung von Schutzbeschichtungen von Metalloberflächen bekannt, insbesondere von Schutzbeschichtungen für Getränkedosen aus Aluminium. Die erhaltenen Beschichtungen zeigen gute Beständigkeiten gegenüber den chemischphysikalischen Bedingungen wie in den üblichen Abfüll- und Sterilisierungsverfahren von Getränken vorliegen.

Es ist daher Aufgabe der vorliegenden Erfindung verbesserte Beschichtungssysteme zur Dekoration von Glaskörpern mittels Inkjet-Druckverfahren sowie verbesserte Verfahren zur Bedruckung von Glasoberflächen zur Verfügung zu stellen. Gelöst wird diese Aufgabe durch Beschichtungstoffe gemäß Hauptanspruch sowie durch Beschichtungssysteme und Verfahren zur ihrer Herstellung gemäß Nebenanspruch. Weitere Ausführungsformen werden in den Unteransprüchen und der Beschreibung offenbart.

Auf Glasoberflächen aufgedruckte Dekorationen vor allem Dekorationen auf Gegenständen des täglichen Gebrauchs wie Getränkeflaschen und Trinkgläsern müssen kratz- und wasserbeständig sowie spülmaschinenfest sein. Es hat sich gezeigt, dass die erfindungsgemäßen strahlungshärtenden Primerbeschichtungen eine starke Verankerungen zwischen Glasoberfläche und dem Beschichtungssystem ergeben. Insbesondere Haftung und Beständigkeit der mittels Inkjet-Druckverfahren aufgedruckten Dekorationsbeschichtungen werden deutlich verbessert.

Erfindungsgemäß werden die Primerbeschichtungen aus Beschichtungsstoffen hergestellt, welche zumindest 60 bis 90 Gew.-% monofunktionelle cycloaliphatische Acrylat-Monomere oder monofunktionelle Aryloxyalkyl-Acrylat-Monomere, 1 bis 10 Gew.-% aminofunktionelle Silane, 1 bis 10 Gew.% Photoinitiatoren, bis zu 10 Gew.-% Acrylat-Oligomere und/oder Methacrylat-Oligomere sowie 0,01 bis 1 Gew.-% Tenside ausgewählt aus modifizierten Poly(organo)siloxanen jeweils bezogen auf die Gesamtmasse des Beschichtungsstoffs aufweisen.

Bevorzugt werden Phenoxyethylacrylate als monofunktionelle Aryloxyalkyl-Acrylat-Monomere eingesetzt. Als monofunktionelle cycloaliphatische Acrylat-Monomere werden bevorzugt Trimethylolpropanformalacrylate eingesetzt. Die monofunktionellen Acrylat-Monomere werden erfindungsgemäß bevorzugt in Mengen von 70 bis 90 Gew.-%, besonders bevorzugt 80 bis 90 Gew.-%, jeweils bezogen auf das Gesamtgewicht des Beschichtungsstoffs eingesetzt.

Bevorzugte aminofunktionelle Silane sind Bis[(3-trimethoxy-silyl)propyl]amin und Aminopropyltriethoxysilan. Die Silane werden erfindungsgemäß bevorzugt in Mengen von 1 bis 8 Gew.-%, besonders bevorzugt 2 bis 7 Gew.-%, jeweils bezogen auf das Gesamtgewicht des Beschichtungsstoffs eingesetzt.

Geeignete Photoinitiatoren sind Phosphinoxid-Derivate. Bevorzugte Photoinitiatoren sind Bis(2,4,6-trimethylbenzoyl)-phenylphosphinoxid und 2,4,6-Trimethylbenzoyl-diphenylphosphinoxid. Die Photoinitiatoren werden erfindungsgemäß bevorzugt in Mengen von 2 bis 9 Gew.-% bezogen auf das Gesamtgewicht des Beschichtungsstoffs eingesetzt.

Geeignete Acrylat-Oligomere und Methacrylat-Oligomere sind Polyesteracrylat-Oligomere, Polyestermethacrylat-Oligomere,

Polyetheracrylat-Oligomere, Polyethermethacrylat-Oligomere, Urethanacrylat-Oligomere und Urethanmethacrylat-Oligomere. Bevorzugte Oligomere sind Polyesteracrylat-Oligomere und Urethanmethacrylat-Oligomere. Die Acrylat-Oligomere und/oder Methacrylat-Oligomere werden erfindungsgemäß bevorzugt in Mengen von 0,01 bis 10 Gew.-%, besonders bevorzugt 1 bis 10 Gew.-%, ganz besonders bevorzugt 1 bis 8 Gew.-%, jeweils bezogen auf das Gesamtgewicht des Beschichtungsstoffs eingesetzt.

Erfindungsgemäß bevorzugt werden Siliconpolyether-Derivate als Poly(organo)silioxane eingesetzt. Darüber hinaus können die Primerbeschichtungsstoffe weitere dem Fachmann bekannte und geläufige Hilfsstoffe und Additive enthalten wie z.B. Polymerisationsinhibitoren oder Entschäumer.

Die erfindungsmäßen Primerbeschichtungen werden durch Bestrahlung im Wellenlängenbereich zwischen 450 und 180 nm ausgehärtet. Die eingesetzte Strahlung kann beispielsweise durch UV-Leuchtdioden (LED) oder Quecksilberdampflampen erzeugt werden. So können beispielsweise LED-Strahler mit einer Leistung von 10 bis 20 W oder Quecksilber-Mitteldrucklampen mit einer Leistung von 200 bis 500 W/cm eingesetzt werden.

In einer Ausführungsform werden die Beschichtungen, welche aus den erfindungsgemäßen Beschichtungsstoffen erhalten werden, als Primerschicht auf Glasoberflächen eingesetzt. Insbesondere werden sie als Primerschicht in Beschichtungssystemen zur Dekoration von Glasoberflächen, welche mittels Inkjet-Verfahren bedruckt werden, eingesetzt.

Eine weitere Ausführungsform der vorliegenden Erfindung ist ein Beschichtungssystem zur Dekoration einer Glasoberfläche, welches eine Primerschicht hergestellt aus zumindest einer Primerbeschichtung, eine Musterschicht hergestellt aus zumindest einer Tintenschicht und eine Topcoatschicht hergestellt aus zumindest einer Topcoatbeschichtung aufweist.

Die Primerbeschichtungen werden aus UV-härtenden Beschichtungsstoffen hergestellt, welche zumindest 60 bis 90 Gew.-% monofunktionelle cycloaliphatische Acrylat-Monomere oder monofunktionelle Aryloxyalkyl-Acrylat-Monomere, 1 bis 10 Gew.-% aminofunktionelle Silane, 1 bis 10 Gew.% Photoinitiatoren aufweisen. Zusätzlich können die Primerbeschichtungsstoffe bis zu 10 Gew.-% Acrylat-Oligomere und/oder Methacrylat-Oligomere sowie bis zu 1 Gew.-% Tenside aufweisen.

Zur Herstellung der Beschichtungen der Musterschicht werden UV-härtenden Tinten eingesetzt, welche für das Inkjet-Druckverfahren geeignet sind. Die Inkjet-Tinten enthalten bevorzugt Pigmente, Oligomere, Photoinitiatoren und Reaktivverdünner. Zusätzlich können sie weitere dem Fachmann bekannte und geläufige Additive enthalten.

Um das Druckbild zu bessern, können auf der Primerschicht zunächst helle bevorzugt weiße Tintenbeschichtungen aufgebracht werden. Diese werden aus Inkjet-Tinten hergestellt, welche bevorzugt weiße Farbpigmente enthalten. Anschließend werden auf den weißen Tintenbeschichtungen die Farbtinten aufgebracht. Dabei werden Farbtinten in den für den Farbdruck üblichen Farben eingesetzt.

Zur Herstellung der Topcoatschicht werden bevorzugt Klarlackbeschichtungen eingesetzt, welche aus UV-härtenden Klarlacken hergestellt werden. Im folgenden wird unter dem Begriff Klarlack ein Beschichtungsstoff verstanden, der eine transparente Beschichtung ergibt, welche neben den schützenden Eigenschaften auch dekorative und technische Effekte haben kann. Erfindungsgemäß geeignete Klarlacke enthalten Oligomere, Reaktivverdünner und Photoinitiatoren sowie gegebenenfalls weitere dem Fachmann bekannte und geläufige Additive.

Der erfindungsgemäße Schichtaufbau führt zu besonders beständigen Druckbildern, die insbesondere den Anforderungen an die Dekorationen von Lebensmittelbehältern wie Getränkeflaschen und Trinkgläser entsprechen. Sie zeigen hohe Kratz- und Wasserbeständigkeiten sowie eine hohe Spülmaschinenfestigkeit.

Eine weitere Ausführungsform der vorliegenden Erfindung ist ein Verfahren zur Bedruckung von Glasoberflächen, welches die folgenden Schritte aufweist:
(a) Applizieren eines oder mehrerer Primerbeschichtungsstoffe mittels Inkjet-Druckverfahren,
(b) Angelieren des applizierten beschichtungsstoffs oder der applizierten Primerbeschichtungsstoffe durch Bestrahlung mit UV-Strahlung,
(c) Applizieren einer oder mehrerer Tinten mittels Inkjet-Druckverfahren,
(d) Angelieren der applizierten Tinte oder der applizierten Tinten durch Bestrahlung mit UV-Strahlung
(e) Applizieren eines oder mehrere Klarlacke mittels Inkjet-Druckverfahren,
(f) Aushärten des gesamten Schichtaufbaus durch Bestrahlung mit UV-Strahlung.

Zum Angelieren oder Pinning in den Schritten (b) und (d) werden als Strahlungsquelle bevorzugt LED-Strahler, die Strahlung einer Wellenlänge von 385 oder 395 nm abgeben, eingesetzt. Die Leistung liegt bei 2 bis 5 W. Bevorzugt wird mit einer Dosis im Bereich von 20 bis 100 mJ/cm² bestrahlt.

Im letzten Schritt (f) wird der gesamte Schichtaufbau aus Primerschicht bestehend aus den angelierten Primerbeschichtungen, Musterschicht bestehend aus den angelierten Tintenbeschichtungen und Topcoatschicht bestehend aus den angelierten Klarlackbeschichtungen durch Bestrahlung mit Strahlung oder Licht im Wellenlängenbereich zwischen 450 und 180 nm vollständig ausgehärtet. Bevorzugt werden hierzu Quecksilber-Mitteldrucklampen mit einer Leistung von 200 bis 500 W/cm und einer bevorzugten Dosis von 500 bis 2000 mJ/cm² eingesetzt.

In einer bevorzugten Ausführungsform des Verfahren werden die Schritte (c) und (d) zunächst unter der Verwendung von weißen Tinten durchgeführt, dann unter Verwendung von Farbtinten wiederholt. Auf diese Weise werden helle, bevorzugt weiße, Tintenbeschichtungen erzeugt, auf die das eigentliche Bild oder Muster aufgedruckt wird. Durch die weiße Unterlegung wird ein deutlich verbessertes Druckbild erhalten, insbesondere auf farbigen oder dunklen Substratoberflächen.

Die UV-härtenden Primerbeschichtungsstoffe, Tinten und Klarlacke werden mit handelsüblichen Inkjet-Druckern appliziert. Bevorzugt werden Inkjet-Drucker eingesetzt, die zum Bedrucken von Formkörpern geeignet sind. Die aufgedruckten Beschichtungsstoffe werden angeliert bzw. einem Pinning ausgesetzt. Unter den Begriffen Angelieren und Pinning wird im Folgenden die Fixierung eines Beschichtungsstoffs durch eine Vorreaktion verstanden. Der Beschichtungsstoff wird angeliert, d.h. er wird soweit vorgehärtet, dass er nicht mehr flüssig ist. Er bildet schon eine hinreichend feste Beschichtung aus, die jedoch noch nicht vollständig durchgehärtet ist. Dieses Verfahren verhindert unerwünschte Verläufe und verbessert die Haftung der Beschichtungsstoffe.

Im letzten Schritt wird der gesamte Schichtaufbau aus Primerschicht, Musterschicht und Topcoatschicht vollständig ausgehärtet. Bei diesem abschließenden Aushärten aller aufgedruckten und angelierten Schichten vernetzen die Beschichtungen auch untereinander, so dass sehr stabile Schichtaufbauten entstehen. Zur Verbesserung der chemischen und mechanischen Anbindung der Primerschicht kann in einer weiteren Ausführungsform der vorliegenden Erfindung die Glasoberfläche vor der Bedruckung durch Flammensilikatisierung vorbehandelt werden. Dabei führt die oxidative Reaktion von organischen Siliziumverbindungen, wie z.B. Silanen, zu einer festen nanoporösen Silikatschicht, die teilweise hydrolysiert. Dadurch werden reaktive Hydroxygruppen gebildet und die Oberflächenenergie erhöht.

Das erfindungsgemäße Verfahren kann mit der für Fertigungslinien üblichen Vorschubgeschwindigkeit von 5 bis 20 m/Minute durchgeführt werden. Es ist daher ohne Weiteres als in-line-Verfahren zur Glasdekoration integrierbar. Da die Primerbeschichtungsstoffe ebenso wie die Tinten und die Klarlacke mittels Inkjet-Druckverfahren appliziert werden, kann bei diesen in-line-Verfahren mit nur einem Druckmodul gearbeitet werden kann.

Das erfindungsgemäße Verfahren ist zur Bedruckung von Flachgläsern und Glasformbehältern geeignet, insbesondere zur Bedruckung von Trinkgläsern, Getränkeflaschen und Glasverpackungen für Lebensmittel.

### Beispiel

### Beispiel 1

### Zusammensetzung des Primerbeschichtungsstoffs

| **Bestandteil** | **Menge [Gew. -%]** |
|---|---|
| Phenoxyethylacrylat | 83,5 |
| Urethanmethacryl-Oligomer | 5,0 |
| Bis[(3-trimethoxysilyl)propyl]amin | 5,0 |
| Siliconpolyetheracrylat | 0,5 |
| Bis(2,4,6-trimethylbenzoyl)-phenylphosphinoxid | 3, 0 |
| 2,4,6-Trimethylbenzoyl-diphenylphosphinoxid | 3, 0 |

### Druckverfahren:

Zur Bedruckung wurde eine handelsübliche Inkjet-Druckanlage für Rotationskörper mit einem Druckkopf-Typ Konica Minolta KM1024 eingesetzt. Es wurden handelsübliche Trinkgläser bedruckt. Zunächst wurden die Glasoberflächen mit einer Flammensilikatisierung vorbehandelt. Anschließend wurde der Primerbeschichtungsstoff aus Beispiel 1 mit einer Auflösung vom 360 x 360 dpi aufgedruckt. Die Druckgeschwindigkeit betrug 20 m/min. Danach wurde ein Pinning der aufgedruckten Beschichtung durch einen LED-Strahler mit 2 W Leistung bei einer Wellenlänge von 395 nm durchgeführt. Auf die angelierte Primerbeschichtung wurde eine handelsübliche weiße UV-härtende Inkjet-Tinte mit einer Auflösung vom 360 x 360 dpi aufgedruckt. Die Druckgeschwindigkeit betrug 20 m/min. Danach wurde ein Pinning der aufgedruckten Beschichtung durch einen LED-Strahler mit 2 W Leistung bei einer Wellenlänge von 395 nm durchgeführt. Auf die angelierte weiße Tintenbeschichtung wurden handelsübliche UV-härtende Inkjet-Farbtinten mit einer Auflösung vom 360 x 360 dpi aufgedruckt. Die Druckgeschwindigkeit betrug 20 m/min. Danach wurde ein Pinning der aufgedruckten Beschichtung durch einen LED-Strahler mit 2 W Leistung bei einer Wellenlänge von 395 nm durchgeführt. Auf die angelierten Farbtintenbeschichtungen wurde ein handelsüblicher UV-härtender, Inkjet-fähiger Klarlack mit einer Auflösung vom 360 x 360 dpi aufgedruckt. Die Druckgeschwindigkeit betrug 20 m/min. Anschließend wurden alle aufgedruckten und angelierten Beschichtungen durch die Bestrahlung mit einer Quecksilber-Mitteldrucklampe mit einer Leistung von 270 W/cm ausgehärtet.

### Bestimmung der Kratzbeständigkeit:

Dabei wurde ein mit einem Gewicht belasteter Ritzstichel Erichsen-Spitze 435S, mit der Spitze auf die zu prüfende Beschichtung aufgesetzt und senkrecht auf der zu prüfenden Fläche stehend über die Fläche gezogen. Anschließend wurde visuell beurteilt, ob die geprüfte Beschichtung eine Kratzspur aufweist. Die maximale Gewichtskraft, mit welcher der Ritzstichel belastet werden kann, ohne dass die Beschichtung bei der Prüfung verletzt wird, ist ein Maß für die Kratzbeständigkeit der Beschichtung. Ein Ergebnis von 5 Newton oder mehr ohne Beschädigung der Beschichtung wird als gute Kratzbeständigkeit bewertet.

### Bestimmung der Haftung (Gitterschnitt-Test):

Für einen Gitterschnitt werden sechs parallele Schnitte mit einem Cuttermesser auf der Beschichtung der Probekörper aufgebracht. Die Schnitte in die Beschichtung sind dabei so tief, dass sie bis auf die Substratoberfläche gehen, ohne diese zu verletzen. Anschließend werden sechs weitere parallele Schnitte angebracht, die senkrecht zu den ersten verlaufen und mit diesen ein gleichmäßige Quadrat oder Gitter bilden. Der Rasterabstand beträgt dabei 1 mm. Auf das entstandene Quadrat wird ein Klarschicht- oder Kreppbandstreifen mit einer Klebekraft von 8 bis 10 N/25mm aufgeklebt. Diese wird in einer Zeit von 0,5 bis 1 s in einem Winkel von 60° abgezogen. Dann wird das Gitter bzw. die Beschichtung visuell ausgewertet. Der Gitterschnittkennwert GT 0 entspricht dabei einer sehr guten Haftfestigkeit, der Kennwert GT 5 entspricht einer sehr schlechten Haftfestigkeit.

### Bestimmung der Haftfestigkeit (Tape-Test):

Auf den beschichteten Probekörper wird ein Klebebandstreifen (Typ Tesa-Film 57370-00002) mit leichtem Druck und ohne Luftblaseneinschluss auf die zu prüfende Beschichtung aufgebracht. Es wird 10 Sekunden gewartet und der Klebebandstreifen in einem Winkel von 60° abgezogen und visuell beurteilt. Die Haftfestigkeit wird als gut bewertet, wenn keinerlei Anhaftungen auf dem Klebebandstreifen zu erkennen sind.

### Bestimmung der Wasserfestigkeit:

Der Probekörper wird für drei Tage bei 23° C vollständig in Wasser eingetaucht. Anschließend wird der Probekörper aus dem Wasser entnommen und ohne Rekonditionierung auf Haftfestigkeit (Gitterschnitt und Tape-Test) sowie Kratzbeständigkeit geprüft. Die Wasserfestigkeit wird als gut beurteilt, wenn die drei Prüfungen nach Wassereinlagerung keine schlechteren Ergebnisse liefern als vor der Wassereinlagerung.

### Bestimmung der Spülmaschinenfestigkeit:

Der Probekörper wird in einer handelsüblichen Industriespülmaschine bei 60 bis 75°C für 10 Minuten mit einem handelsüblichen Industriespülmittel gespült. Danach erfolgt eine visuelle Bewertung der Beschichtungsoberfläche, wobei insbesondere Veränderung der Oberfläche und Verfärbungen ausgewertet werden. Nach 10 Minuten Rekonditionierung bei 23°C und 50% relativer Luftfeuchte werden Gitterschnitt-Test und Tape-Test durchgeführt. Die Anzahl der Spülgänge ohne Verschlechterung der Prüfergebnisse wird bestimmt.

Die Ergebnisse der Prüfungen sind in der folgenden Tabelle zusammengefasst.

**Tabelle: Zusammenfassung der Ergebnisse**

| Prüfung | Ergebnis direkt nach Aushärtung | Ergebnis nach Wassereinlagerung | Ergebnis nach 1000 Spülgängen |
|---|---|---|---|
| Kratzbeständigkeit | > 5 N | > 5 N | > 5 N |
| Gitterschnitt-Test | GT 0 | GT 0 | GT 0 |
| Tape-Test | keine Anhaftung | keine Anhaftung | keine Anhaftung |
| visuelle Beurteilung | Referenz | keine Veränderung | keine Veränderung |

Alle Probekörper zeigen eine gute Haftung der Beschichtung auf dem Substrat und eine hohe Kratzbeständigkeit, die auch durch Reinigungsprozesse nicht verschlechtert werden. Die Einwirkung von Wasser, Chemikalien und Temperatur wie sie bei üblichen Reinigungsverfahren auftreten, zeigen keine visuell erkennbare Auswirkung auf die Glasbeschichtung.

## Patentansprüche

1. Beschichtungsstoff zur Herstellung einer UV-härtenden Primerbeschichtung aufweisend zumindest 60 bis 90 Gew.-% monofunktionelle cycloaliphatische Acrylat-Monomere oder monofunktionelle Aryloxyalkyl-Acrylat-Monomere,
1 bis 10 Gew.-% aminofunktionelle Silane,
1 bis 10 Gew.% Photoinitiatoren,
bis zu 10 Gew.-% Acrylat-Oligomere und/oder
Methacrylat-Oligomere sowie
0,01 bis 1 Gew.-% Tenside ausgewählt aus modifizierten Poly(organo)siloxanen,
jeweils bezogen auf das Gesamtgewicht des Beschichtungsstoffs.

2. Beschichtungsstoff nach Anspruch 1, **dadurch gekennzeichnet, dass** die modifizierten. Poly(organo)siloxane Siliconpolyether-Derivate sind.

3. Beschichtungsstoff nach einem der Ansprüche 1 oder 2, **dadurch gekennzeichnet, dass** die monofunktionellen Aryloxyalkyl-Acrylat-Monomere Phenoxyethylacrylate sind.

4. Beschichtungsstoff nach einem der Ansprüche 1 oder 2, **dadurch gekennzeichnet, dass** die monofunktionelle cycloaliphatische Acrylat-Monomere Trimethylolpropanformalacrylate sind.

5. Beschichtungsstoff nach einem der voranstehenden Ansprüche, **dadurch gekennzeichnet, dass** die Silane Bis[(3-trimethoxysilyl)propyl]amin und/oder Aminopropyltriethoxysilan sind.

6. Beschichtungsstoff nach einem der voranstehenden Ansprüche, **dadurch gekennzeichnet, dass** die Photoinitiatoren Phosphinoxid-Derivate sind.

7. Beschichtungsstoff nach einem der voranstehenden Ansprüche, **dadurch gekennzeichnet, dass** der Beschichtungsstoff 0,01 bis 10 Gew.-% Acrylat-Oligomere und/oder Methacrylat-Oligomere, bevorzugt 1 bis 10 Gew.-%, besonders bevorzugt 1 bis 8 Gew.-%, jeweils bezogen auf das Gesamtgewicht des Beschichtungsstoffs enthält.

8. Beschichtungsstoff nach einem der voranstehenden Ansprüche, **dadurch gekennzeichnet, dass** die Acrylat-Oligomere und Methacrylat-Oligomere ausgewählt sind aus der Gruppe enthaltend Polyesteracrylat-Oligomere, Polyestermethacrylat-Oligomere, Polyetheracrylat-Oligomere, Polyethermethacrylat-Oligomere, Urethanacrylat-Oligomere, Urethanmethacrylat-Oligomere und deren Gemische.

9. Beschichtungssystem zur Dekoration einer Glasoberfläche aufweisend
eine Primerschicht umfassend zumindest eine Primerbeschichtung, wobei die Primerbeschichtung hergestellt ist aus Beschichtungsstoffen aufweisend zumindest 60 bis 90 Gew.-% monofunktionelle cycloaliphatische Acrylat-Monomere oder monofunktionelle Aryloxyalkyl-Acrylat-Monomere, 1 bis 10 Gew.-% aminofunktionelle Silane, 1 bis 10 Gew.% Photoinitiatoren sowie bis zu 10 Gew.-% Acrylat-Oligomere und/oder Methacrylat-Oligomere, jeweils bezogen auf das Gesamtgewicht des Beschichtungsstoffs,
eine Musterschicht umfassend zumindest eine Tintenbeschichtung und
eine Topcoatschicht umfassend zumindest eine Topcoatbeschichtung.

10. Beschichtungssystem nach Anspruch 9, **dadurch gekennzeichnet, dass** die Tintenbeschichtungen aus UV-härtenden Inkjet-Tinten hergestellt sind.

11. Beschichtungssystem nach einem der Ansprüche 9 bis 10, **dadurch gekennzeichnet, dass** Topcoatbeschichtungen aus UV-härtenden Klarlacken hergestellt sind.

12. Verfahren zur Bedruckung von Glasoberflächen umfassend die Schritte
(a) Applizieren eines oder mehrerer Primerbeschichtungsstoffe aufweisend zumindest 60 bis 90 Gew.-% monofunktionelle cycloaliphatische Acrylat-Monomere oder monofunktionelle Aryloxyalkyl-Acrylat-Monomere, 1 bis 10 Gew.-% aminofunktionelle Silane, 1 bis 10 Gew.% Photoinitiatoren, sowie bis zu 10 Gew.-% Acrylat-Oligomere und/oder Methacrylat-Oligomere, jeweils bezogen auf das Gesamtgewicht des Beschichtungsstoffs, mittels Inkjet-Druckverfahren,
(b) Angelieren des applizierten Primerbeschichtungsstoffs oder der applizierten Primerbeschichtungsstoffe durch Bestrahlung mit UV-Strahlung,
(c) Applizieren einer oder mehrerer Tinten mittels Inkjet-Druckverfahren,
(d) Angelieren der applizierten Tinte oder der applizierten Tinten durch Bestrahlung mit UV-Strahlung
(e) Applizieren einer oder mehrere Klarlacke mittels Inkjet-Druckverfahren,
(f) Aushärten des gesamten Schichtaufbaus durch Bestrahlung mit UV-Strahlung.

13. Verfahren nach Anspruch 12, **dadurch gekennzeichnet, dass** die Schritte (c) und (d) wiederholt werden, wobei zunächst eine oder mehrere weiße Tinten appliziert (c1) und angeliert (d1) werden und darauf anschließend ein oder mehrere Farbtinten appliziert (c2) und angeliert (d2) werden.

14. Verfahren nach einem der Ansprüche 12 oder 13, **dadurch gekennzeichnet, dass** es zur Bedruckung von Flachgläsern und Glasformbehältern eingesetzt wird.

15. Verfahren nach einem der Ansprüche 12 bis 14, **dadurch gekennzeichnet, dass** es zur Bedruckung von Trinkgläsern, Getränkeflaschen und Glasverpackungen für Lebensmittel eingesetzt wird.

## Claims

1. A coating material for the production of a UV-curing primer coating comprising at least
60 to 90 % by weight of monofunctional cycloaliphatic acrylate monomers or monofunctional aryloxy alkyl acrylate monomers,
1 to 10 % by weight of amino-functional silanes,
1 to 10 % by weight of photoinitiators,
up to 10 % by weight of acrylate oligomers and/or methacrylate oligomers as well as
0.01 to 1 % by weight of surfactants selected from among modified poly(organo)siloxanes,
each based on the total weight of the coating material.

2. The coating material as defined in claim 1, **characterized in that** the modified poly(organo)siloxanes are silicone polyether derivates.

3. The coating material as defined in claim 1 or 2, **characterized in that** the monofunctional aryloxy alkyl acrylate monomers are phenoxyethyl acrylates.

4. The coating material as defined in claim 1 or 2, **characterized in that** the monofunctional cycloaliphatic acrylate monomers are trimethylolpropane formal acrylates.

5. The coating material as defined in one of the preceding claims, **characterized in that** the silanes are bis[(3-trimethoxysilyl)propyl]amine and/or aminopropyltriethoxysilane.

6. The coating material as defined in one of the preceding claims, **characterized in that** the photoinitiators are phosphine oxide derivatives.

7. The coating material as defined in one of the preceding claims, **characterized in that** the coating material contains 0.01 to 10 % by weight of acrylate oligomers and/or methacrylate oligomers, preferably 1 to 10 % by weight, more preferably 1 to 8 % by weight, each based on the total weight of the coating material.

8. The coating material as defined in one of the preceding claims, **characterized in that** the acrylate oligomers and methacrylate oligomers are selected from the group consisting of polyester acrylate oligomers, polyester methacrylate oligomers, polyether acrylate oligomers, polyether methacrylate oligomers, urethane acrylate oligomers, urethane methacrylate oligomers and mixtures thereof.

9. A coating system for the decoration of a glass surface containing
a primer layer comprising at least one primer coating, with the primer coating being produced from coating materials containing at least 60 to 90 % by weight of monofunctional cycloaliphatic acrylate monomers or monofunctional aryloxy alkyl acrylate monomers, 1 to 10 % by weight of amino-functional silanes, l to 10 % by weight of photoinitiators as well as up to 10 % by weight of acrylate oligomers and/or methacrylate oligomers, each based on the total weight of the coating material,
a decorative layer comprising at least one ink coating and
a top coat layer containing at least one top coat.

10. The coating system as defined in claim 9, **characterized in that** the ink coatings have been produced from UV-curing inkjet inks.

11. The coating system as defined in any one of claims 9 to 10, **characterized in that** the top coats have been produced from UV-curing clear coats.

12. A method for printing on glass surfaces comprising the steps
(a) applying - by means of inkjet printing methods - at least one primer coating containing at least 60 to 90 % by weight of monofunctional cycloaliphatic acrylate monomers or monofunctional aryloxy alkyl acrylate monomers, 1 to 10 % by weight of amino-functional silanes, 1 to 10 % by weight of photoinitiators, as well as up to 10 % by weight of acrylate oligomers and/or methacrylate oligomers, each based on the total weight of the coating material,
(b) pre-gelling of the applied coating material or the applied primer coating materials by UV radiation,
(c) applying at least one ink by means of inkjet printing methods,
(d) pre-gelling of the applied ink or the applied inks by UV radiation,
(e) applying at least one clear coat by means of inkjet printing methods,
(f) curing of the entire layer construction by UV radiation.

13. The method as defined in claim 12, **characterized in that** the steps (c) and (d) are repeated, with at least one white ink being applied (c1) and pre-gelled (d1) in a first step, and afterwards at least one colour ink being applied thereto (c2) and pre-gelled thereon(d2).

14. The method as defined in claim 12 or claim 13, **characterized in that** said method is employed for printing on flat glass and glass-formed containers.

15. The method as defined in any one of claims 12 to 14, **characterized in that** said method is employed for printing on drinking glasses, beverage bottles and glass packagings for food.

## Revendications

1. Un matériau de revêtement pour la fabrication d'un revêtement d'apprêt durcissant aux UV, comprenant au moins
60 à 90 % en poids de monomères d'acrylate cycloaliphatiques monofonctionnels ou de monomères d'acrylate aryloxyalkyle monofonctionnels,
1 à 10 % en poids de silanes aminofonctionnels,
1 à 10 % en poids de photoinitiateurs,
jusqu'à 10 % en poids d'oligomères d'acrylate et/ou d'oligomères de méthacrylate, ainsi que
0,01 à 1 % en poids de tensioactifs choisis parmi les poly(organo)siloxanes modifiés,
chaque quantité étant exprimée par rapport au poids total du matériau de revêtement.

2. Le matériau de revêtement selon la revendication 1, **caractérisé en ce que** les poly(organo)siloxanes modifiés sont des dérivés de polyéther de silicone.

3. Le matériau de revêtement selon l'une des revendications 1 ou 2, **caractérisé en ce que** les monomères d'acrylate aryloxyalkyle monofonctionnels sont des acrylates de phénoxyethyle.

4. Le matériau de revêtement selon l'une des revendications 1 ou 2, **caractérisé en ce que** les monomères d'acrylate cycloaliphatiques monofonctionnels sont des formalacrylates de triméthylolpropane.

5. Le matériau de revêtement selon l'une des revendications précédentes, **caractérisé en ce que** les silanes sont la bis[(3-triméthoxysilyl)propyl]amine et/ou l'aminopropyltriéthoxysilane.

6. Le matériau de revêtement selon l'une des revendications précédentes, **caractérisé en ce que** les photoinitiateurs sont des dérivés d'oxyde de phosphine.

7. Le matériau de revêtement selon l'une des revendications précédentes, **caractérisé en ce que** le matériau de revêtement contient 0,01 à 10 % en poids d'oligomères d'acrylate et/ou d'oligomères de méthacrylate, de préférence 1 à 10 % en poids, ou mieux encore 1 à 8 % en poids, chaque quantité étant exprimée par rapport au poids total du matériau de revêtement.

8. Le matériau de revêtement selon l'une des revendications précédentes, **caractérisé en ce que** les oligomères d'acrylate et les oligomères de méthacrylate sont choisis dans le groupe contenant les oligomères d'acrylate de polyester, les oligomères de méthacrylate de polyester, les oligomères d'acrylate de polyéther, les oligomères de méthacrylate de polyéther, les oligomères d'acrylate d'uréthane, les oligomères de méthacrylate d'uréthane et leurs mélanges.

9. Un système de revêtement pour la décoration d'une surface de verre, comprenant
une couche d'apprêt comprenant au moins un revêtement d'apprêt, le revêtement d'apprêt étant préparé à partir de matériaux de revêtement présentant au moins 60 à 90 % en poids de monomères d'acrylate cycloaliphatiques monofonctionnels ou de monomères d'acrylate aryloxyalkyle monofonctionnels, 1 à 10 % en poids de silanes aminofonctionnels, 1 à 10 % en poids de photoinitiateurs ainsi que jusqu'à 10 % en poids d'oligomères d'acrylate et/ou d'oligomères de méthacrylate, chaque quantité étant exprimée par rapport au poids total du matériau de revêtement,
une couche décorative comprenant au moins un revêtement d'encre et
une couche de finition comprenant au moins un revêtement de finition.

10. Le système de revêtement selon la revendication 9, **caractérisé en ce que** les revêtements d'encre sont fabriqués à partir d'encres à jet d'encre durcissant aux UV.

11. Le système de revêtement selon l'une des revendications 9 à 10, **caractérisé en ce que** les revêtements de finition sont fabriqués à partir de laques transparentes durcissant aux UV.

12. Un procédé d'impression de surfaces de verre comprenant les étapes suivantes
(a) application par procédé d'impression à jet d'encre d'un ou de plusieurs matériaux de revêtement d'apprêt présentant au moins 60 à 90 % en poids de monomères d'acrylate cycloaliphatiques monofonctionnels ou de monomères d'acrylate aryloxyalkyle monofonctionnels, 1 à 10 % en poids de silanes aminofonctionnels, 1 à 10 % en poids de photoinitiateurs, ainsi que jusqu'à 10 % en poids d'oligomères d'acrylate et/ou d'oligomères de méthacrylate, chaque quantité étant exprimée par rapport au poids total du matériau de revêtement,
(b) prégélification par irradiation ultraviolette du matériau de revêtement d'apprêt appliqué ou bien des matériaux de revêtement d'apprêt appliqués,
(c) application d'une ou de plusieurs encres par procédé d'impression à jet d'encre,
(d) prégélification par irradiation ultraviolette de l'encre appliquée ou bien des encres appliquées
(e) application d'une ou de plusieurs laques transparentes par procédé d'impression à jet d'encre,
(f) durcissement de la structure entière des couches par irradiation ultraviolette.

13. Le procédé selon la revendication 12, **caractérisé en ce que** les étapes (c) et (d) sont répétées, une ou plusieurs encres blanches étant d'abord appliquées (c1) et prégélifiées (d1), puis une ou plusieurs encres de couleur étant ensuite appliquées (c2) et prégélifiées. (d2) sur celles-ci.

14. Le procédé selon l'une des revendications 12 ou 13, **caractérisé en ce que** celui-ci est utilisé pour l'impression de verres plats et de récipients façonnés en verre.

15. Le procédé selon l'une des revendications 12 à 14, **caractérisé en ce que** celui-ci est utilisé pour l'impression de verres à boire, de bouteilles de boissons et d'emballages de verre pour produits alimentaires.
